# EUROPEAN PATENT SPECIFICATION

(11) **EP 1 014 809 B1**
(45) Date of publication and mention of the grant of the patent: **28.11.2001**
(21) Application number: 98943123.4
(22) Date of filing: 11.09.1998
(51) Int. Cl.: A23L 3/3508

(54) **AQUEOUS PRESERVATIVE AGENTS**
WAESSRIGE KONSERVIERUNGSMITTEL
AGENTS CONSERVATEURS AQUEUX

(30) Priority: 11.09.1997 NO 974200
(43) Date of publication of application: 05.07.2000
(73) Proprietor: NORSK HYDRO ASA, 0240 Oslo (NO)
(72) Inventor: HJORNEVIK, Leif, N-3714 Skien (NO); ANDERSEN, Tore, Roberg, N-3124 Tonsberg (NO); SELMER-OLSEN, Ingvar, N-1473 Skarer (NO)
(74) Representative: Bleukx, Lucas Lodewijk M.
(86) International application number: NO9800274
(87) International publication number: WO9912435

(56) References cited:
- EP-A1- 0 760 402
- WO-A1-87/02714
- WO-A1-93/16603
- US-A- 3 962 475
- US-A- 4 401 624
- US-A- 5 017 612

## Description

The present invention relates to aqueous preservative agents for grass and other agricultural crops, fish and fish product and meat products, comprising at least one C₁₋₈ monocarboxcylic acid and/or their salts and at least one corrosion inhibitor and possibly also an antioxidant.

Organic acids are extensively used as silage additives for grass and other crops and for fish and food offals. Acids and acid salts applied at a rate of 2-6 kg/ton have the general effect of reducing pH and thereby reducing plant respiration and proteolysis and inhibiting undesired bacteria such as Clostridia. Lactic acid bacteria are also inhibited, however, in most cases lactic acid fermentation is the predominant process. Acids mainly used for silage are formic acid, acetic acid, propionic acid, lactic acids or their mixtures. Even organic acids having chain length up to C₈ are used to some extent as preservatives to obtain special effects, such as inhibiting yeasts and moulds. Formic acid, commonly 85% concentration, is the most widespread acid silage preservative according to J.M. Wilkinson et al, (1966) "Silage in Europe. A survey of 33 countries", Chalcombe Publications Ltd., Lincoln UK, mainly due to its efficient acidification and antimicrobial effect, according to McDonald et al, (1991) "The biochemistry of Silage", Second Ed., Chalcombe Publications, Lincoln UK.

The negative aspect of using the above acids, especially when strong solutions are used, is that when they get in contact with the skin or the eye, serious damage may occur. Another, and increasingly important problem to be solved, is the corrosion such acids cause on metal parts of equipment used, such as expensive harvesters, precision choppers, pick-up wagons and balers.

One way of reducing the corrosiveness of the preservative is to reduce the amount of free acid. Such a solution is described in GB 1.505.388-A, which describes a preservative primarily based on formic acid partially neutralized with ammonia and thus forming ammonium tetraformate. Though this preservative is substantially less corrosive than formic acid, the corrosion rate is still a problem with regard to the equipment used today. There is also known a preservative comprising about 25% formic acid and about 25% acetic acid and the balance being a bi-product from pulp and paper industry comprising sugar and lignosulfonates. Green fodder preservation composition comprising technical lignosulphates is also described in RU 1.642.274. The corrosion rate is primarily reduced by reducing the presence of the most active preservative agents.

Various types of corrosion inhibitors like aminobacterin have also been proposed in preservatives based on formic-, acetic- and propionic acids in water. According to SU 1.727.778-A1 the corrosion rate is reduced by 7-8 times with regard to carbon steel when such inhibitors are used.

A further significant reduction in corrosiveness of acid based silage additives was however considered necessary, and searches for suitable corrosion inhibitors were initiated. Numerous corrosion inhibitors are known from other fields, but far from all of these will be acceptable in preservative agents. Thus, corrosion inhibitors for the field in question must fulfil criteria such as being acceptable for use in animal feed, have no negative influence on the silage fermentation process, being mixable with the actual acids/salts and they should also be effective in low concentrations in the organic acids.

Use of antioxidants is known in the field, and again this use is limited to antioxidants being acceptable in preservative agents. However, antioxidants alone were not found to meet the desired low corrosion rates.

Regarding corrosion inhibitors applied in other fields of technology, the following can be mentioned:

The patent EP 570.619 B1 relating to cleaning of bathroom fittings, describes use of undiluted aqueous solutions containing acid or alkali salts, for dissolving lime, and that in this solution there is applied an alkyl polyglycoside having the general formula: R-O(-G)ₙ in which R is a long chain alkyl radical containing 8-22 carbon atoms, G is glycoside-bonded residue of a monosaccaride and n = 1-10 as its principal surfactant. This composition is stated to give a high cleaning effect and not acceleration of stress-cracking corrosion. However, there are no teachings in this document regarding the effect of this tenside in organic acids and the corrosion problems related to use of such acids.

In the patent description GB 2.193.224 relating to fuel oil additives containing inorganic salts, there is described stabilisation of said additives by addition of water soluble alkyl glycoside or derivatives thereof. It is further stated in this document that said stabilisers may be used as corrosion inhibitors and/or antifouling agents in fuel oils.

Further, in the patent application DE 4.200.142 A1 there is described a mixture of sulpho:betaine and cationic sulpho:betaine compounds being useful as surfactants, corrosion inhibitors etc. Examples relating to use of said mixtures in hydrochloric acid show corrosion values >25% without the inhibitors and corrosion values <5% with inhibitors when applied on black iron or aluminium.

A process for inhibiting corrosion in oil production fluids is described in the patent EP 446.616 B1. A betaine derivative is added under acidic conditions in amounts of 5-300 ppm. However, there are no teachings with regard to possible use or effectiveness of said additives as corrosion inhibitors in other liquids mixtures then in said oil fluids.

Polyhydric alcohol and triazole compounds are also known as corrosion inhibitors, for instance in refrigeration systems using potassium formate (WO/ 93/09198).

The main objective of the present invention was to arrive at silage or preservative agents based on monocarboxcylic acids or aqueous solutions of at least one of their ammonium-, sodium- or potassium salts mixed with said acids having a low corrosion rate and not causing any health problems to those exposed to such agents.

Another objective was to obtain the low corrosiveness, preferably less than 0.7 mm/year, with use of small amounts of inhibitors that are biodegradable and are not harmful, non toxic etc. during use of preserved grass as feed.

A further objective was to select corrosion inhibitors useful in said preservatives for various uses as preservatives for fish, fish products and meat products etc.

It was also an objective to obtain preservatives based on monocarboxcylic acids with substantially reduced corrosiveness.

The main problem in selecting useful corrosion inhibitors for the special purposes in question was to select among all the known inhibitors known from other fields without any indications with regard to their effectiveness in organic acids. The inventors had also to look into possible effects of compounds not especially used for reduction of corrosion, but having properties which could reduce the attack from the acid on the equipment. Such compounds could be surface active agents, such as tensides.

The first attempts to reduce the corrosion was to change the composition of a known preservative. A preservative comprising formic acid partly neutralized with ammonia was modified by reducing the content of water and increasing the amount of ammonia. The effect of this modification was, however, negligible as the old recipe and the modified one showed corrosion rates of 1.9-2.3 mm/year on carbon steel. Investigations were then performed on partly neutralized formic acid to which were added various types of possible inhibitors. After having considered several possible candidates, the following were selected for further testing with regard to effect and necessary amounts for optimal effect:

Molasses, sucrose, manose, cellubiose, glycerol, propargyl alcohol, Na-lignosulphonate, urea, carboxymethylcellulose (CMC), trimethylamine acetic acid (betaine), betaine derivatives and alkyl glycosides. Even combinations of some of these chemicals were tested.

The above screening tests showed that only a few of these chemicals could reduce the corrosion rate to levels worth considering. The seemingly most effective chemicals were then further investigated, especially with regard to necessary amounts. Test were also run on addition of these chemicals to formic acid.

These latter investigations showed that addition of reasonable amounts of trimethylamino acetic acid (betaine), betaine derivatives and alkyl polyglycosides, urea and lignosulphonate reduced the corrosion rate substantially. However, only the betaine derivatives and certain polyglycosides would reduce the corrosion rate to less than 0.7 mm/year on carbon steel when used in acceptable amounts. Use of betaine derivatives such as cocobetaine (lauryl dimethylamino acetic acid) gave corrosion rates of this order already at addition of only 0.006 weight%. Contrary to this, known corrosion inhibitors as Na-lignosulphonate had to be applied in amounts of about 2 weight% in order to give comparable low corrosion rates. Another known inhibitor, urea, showed hardly any effect even when applied in amounts of 2 weight%.

Most of the experiments were performed by using partly neutralized formic acid (ammonium tetraformate) as the basic preservative. However, other commonly used preservatives as C₂₋₈ monocarboxcylic acids mixed with at least one of their respective ammonium-, sodium- or potassium salts showed similar corrosion rates when the same inhibitors as applied during said main tests were applied in said other acid/salt mixtures.

Having performed the above referred tests, the inventors concluded that preservatives having acceptable low corrosion rates could be obtained by using a mixture of at least one C₁₋₈ monocarboxcylic acid and its respective ammonium-, sodium- and potassium salts and selected surface active additives functioning as corrosion inhibitors. The surface active agent should comprise long chain fatty acids groups, preferably C₈₋₂₂ Those giving best effects turned out to be betaine derivatives and alkyl (C₈₋₂₂) polyglycosides or mixtures of these two types of additives. The most preferred basic preservative was found to be an ammonium tetraformate solution. Efficient amounts of the above two types of inhibitors were found to be respectively 0.001-0.1 weight% dry matter and 0.1-0.5 weight% dry matter based on the weight of the basic preservative.

Thus, the new preservative according to the invention comprises an aqueous solution of at least one C₁₋₈ monocarboxcylic acid or at least one of their respective ammonium-, sodium- or potassium mixed with at least one of said acids and at least one corrosion inhibitor comprising C₈₋₂₂ fatty acid derivatives of trimethylamino acetic acid and/or C₈₋₂₂ alkyl polyglycosides as corrosion inhibitors.

The said preservatives may also contain at least one antioxidant.

The trimethylamino acetic acid derivative content of the preservative should be 0.001-0.1 weight% dry matter based on the weight of the basic preservative.

Corresponding amounts for the polyglycoside inhibitor should be 0.1-0.5 weight% dry matter.

The corrosion inhibitor of the preservative may comprise a mixture of said trimethylamino acetic acid derivative and the alkyl polyglycoside.

The most preferred preservative comprises 0.006-0.06 weight% dry matter of lauryl dimethylamino acetic acid as corrosion inhibitor.

The most preferred basic preservative comprises formic acid partly neutralized with ammonia.

The most preferred preservative based on acids only is formic acid containing 0.001-0.1 weight% dry matter of said trimethylamino acetic acid and/or 0.1-0.5 weight% dry matter of said alkyl polyglycoside.

The invention and its effects are further envisaged in the following examples and figures.
- Figure 1: shows corrosion on carbon steel exposed to a preservative agent according to the invention and as function of amount corrosion inhibitor applied.
- Figure 2: shows corrosion on carbon steel exposed to a preservative agent according to the invention, but with another corrosion inhibitor than that applied for the tests shown in Figure 1.
- Figure 3: shows corrosion on carbon steel exposed to solutions varying from formic acid to grass juice plus water. The corrosion inhibitor applied is the same as for the tests shown in figure 1.

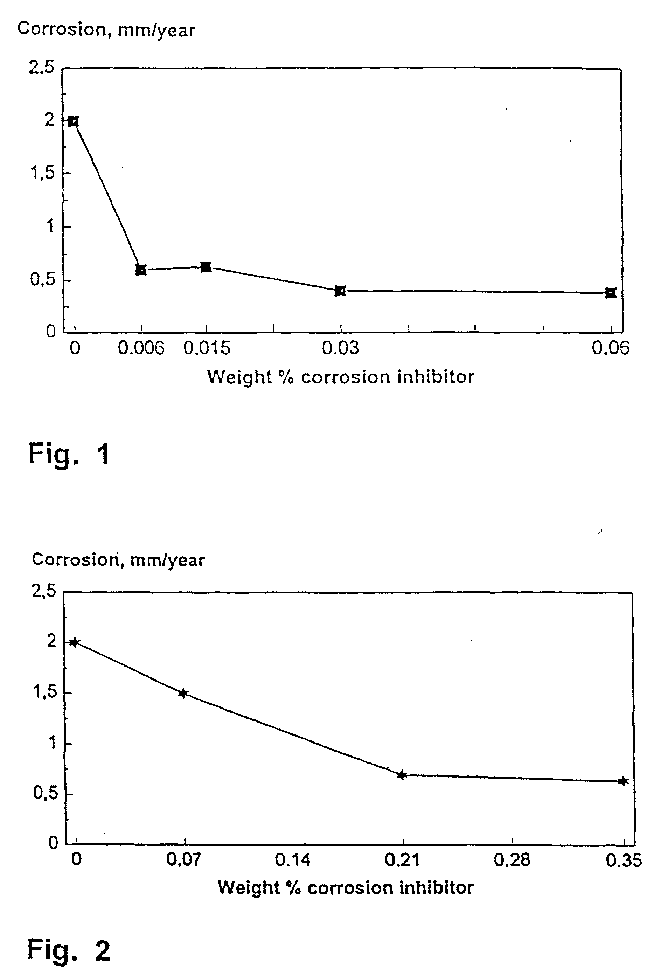

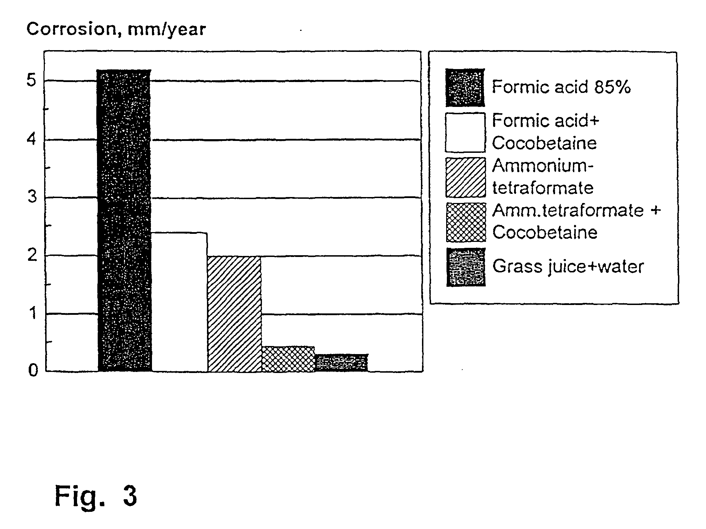

In Figures 1-3 the corrosion rate is shown as mm/year. In Figures 1 and 2 the amounts of corrosion inhibitor are given as weight% dry matter of the preservative used. In Figure 3 the amount of corrosion inhibitor is the same for all the tests, i.e. 0.06 weight%.

The effects of acid and acid salts with different additives/inhibitors on carbon steel corrosion were assessed according to standard procedure (ASTM G31-72 1995). Carbon steel elements were prepared to have uniform size and surface structure (500 grit). The elements were washed with soap, rinsed with water and acetone and treated in an ultra sound bath before the tests were performed. The steel elements were soaked in the test solution at ambient temperature (20°C) for seven days. The liquid : steel surface ratio was 20 ml:1cm². Air was bubbled continuously through the test system to keep the solution saturated with oxygen. Three replicates were run for each treatment. Rate of corrosion was assessed by measuring weight loss.

### Example 1

This example shows the corrosion rate for carbon steel exposed to a basic preservative being an ammonium tetraformate solution (70.1% formic acid, 7.8% ammonia and 22.1% water) containing various additives. The effects of the various inhibitors are compared with the corrosion rates for the basic preservative. The pH before and after the tests were about the same and were in the range of pH 2.9-3.05. Some of the additives/inhibitors were added as solutions of the active additive, but in the table the amounts of additives are given as weight% dry matter of the amount of the basic preservative. The results of the tests are shown in the following Table 1.

**Table 1**

| Test no. | Inhibitor/additive | Amount in weight% | Corrosion rate mm/year |
|---|---|---|---|
| 1 | No inhibitor | | 1.9-2.1 |
| 2 | Molasses | 10 | 0.76 ± 0.04 |
| 3 | Sucrose | 5 | 1.3 ± 0.1 |
| 4 | Mannose | 5 | 1.58 ± 0.09 |
| 5 | Cellubiose | 5 | 1.84 ± 0.07 |
| 6 | Carboxymethylcellulose | 0.5 | 1.6 ± 0.2 |
| 7 | Na-lignosulphonate | 2.0 | 0.63 ± 0.04 |
| 8 | Propargyl alcohol | 0.2 | 1.0 ± 0.1 |
| 9 | Glycerol | 0.5 | 1.9 ± 0.1 |
| 10 | Polyglycoside | 0.35 | 0.64 ± 0.05 |
| 11 | Betaine | 0.2 | 2.0 ± 0.1 |
| 12 | Betaine | 0.5 | 2.5 ± 0.3 |
| 13 | Cocobetaine | 0.06 | 0.60 ± 0.06 |
| 14 | Cocobetaine + Polyglycoside | 0.03+0.07 | 0.53 ± 0.03 |
| 15 | Urea | 2.0 | 2.13 ± 0.04 |

The betaine used in tests 11 and 12 is a pure betaine without any branching and known as a feed additive. The cocobetaine used in test 13 is lauryl dimethylamino acetic acid, and the polyglycocide used in test 10 was an alkyl polyglycoside (fatty acid C₈₋₁₀ glycoside).

As can be seen from Table 1, only a few of the tested additives could reduce the corrosion rate down to acceptable levels and some of these had to be used in rather large amounts, such us lignosulphonate and molasses. In view of the results from this screening test, only betaine derivatives and/or polyglycosides seemed to be of interest for further investigations.

### Example 2

This example shows corrosion rates for carbon steel exposed to a similar basic preservative as in Example 1, but now varying amounts of cocobetaine or alkyl polyglycoside were added as corrosion inhibitors. The composition of the basic preservative was 64.5% formic acid, 6% ammonia and 29.5% water. Table 2 shows the results when cocobetaine was used as inhibitor, the corresponding Figure 1 shows the results graphically. The effects of using polyglycoside as inhibitor are shown in Table 3 and Figure 2.

**Table 2**

| Test no. | Amount in weight% | Corrosion rate mm/year |
|---|---|---|
| 1 | 0.0 | 2.0 |
| 2 | 0.006 | 0.6 ± 0.04 |
| 3 | 0.015 | 0.63 ± 0.04 |
| 4 | 0.03 | 0.40 ± 0.02 |
| 5 | 0.06 | 0.38 ± 0.04 |

**Table 3**

| Test no. | Amount in weight% | Corrosion rate mm/year |
|---|---|---|
| 1 | 0.0 | 2.0 |
| 2 | 0.07 | 1.5 ± 0.0 |
| 3 | 0.21 | 0.70 ± 0.03 |
| 4 | 0.35 | 0.64 ± 0.05 |

Tables 2 and 3 show that cocobetaine gives corrosion rates of about 0.5 mm/year already at amounts of 0.006 weight%, while alkyl pologlycoside must be applied in amounts of 0.35 weight% for giving similar effects. However, the latter amounts are still very low compared with for instance necessary amounts for Na-lignosulphonate (Table 1).

### Example 3

This example shows the corrosion rate for formic acid, ammonium tetraformate (same composition as in Example 2) and ammonium tetraacetate with and without addition of 0.06 weight% cocobetaine. The corrosion rate for grass juice in water is also shown. The results of these tests are shown in Table 4 and Figure 3.

**Table 4**

| Test no. | Liquid/preservative | Inhibitor | Corrosion rate mm/year |
|---|---|---|---|
| 1 | 85% Formic acid | | 5.25 |
| 2 | 85% Formic acid | Cocobetaine | 2.4 ± 0.3 |
| 3 | Ammonium tetraformate | | 2.0 |
| 4 | Ammonium tetraformate | Cocobetaine | 0.38 - 0.52 |
| 5 | Grass juice | | 0.32 ± 0.03 |
| 6 | Ammonium tetraacetate | | 0.65 ± 0.09 |
| 7 | Ammonium tetraacetate | Cocobetaine | 0.40 ± 0.02 |

From Table 4 and Figure 3 it can be seen that application of cocobetaine as corrosion inhibitor in an ammonium tetraformate preservative gives a corrosion rate on carbon steel close to that of grass juice. Cocobetaine will also reduce the corrosion rate for formic acid with about 50% making it far more applicable than today, for instance in connection with preservation of fish and fish products. Also when the preservative is ammonium tetraacetate, which have a low corrosiveness, the corrosion rate is reduced by addition of cocobetaine.

By the present invention the inventors have been able to arrive at new preservative agents being environmental friendly, causing no harm to those exposed to them and at the same time having a very low corrosiveness. The active corrosion inhibitors being compatible with the monocarboxcylic acids and their salts will reduce the corrosion rate on carbon steel almost down to that of grass juice plus water, even when applied in such small amounts as 0.006 weight% dry matter based on the weight of the basic preservative. Preservatives according to the invention based on said monocarboxcylic acids only will also have their corrosiveness reduced as much as about 50% when the they contain these corrosion inhibitors like the above defined betaine derivatives.

## Claims

1. Aqueous preservative agent for grass and other agricultural crops, fish and fish products and meat products, comprising at least one C₁₋₈ monocarboxcylic acid or at least one of their respective ammonium-, sodium- or potassium salts mixed with at least one of said acids and at least one corrosion inhibitor, comprising C₈₋₂₂ fatty acid derivatives of trimethylamino acetic acid and/or C₈₋₂₂ alkyl polyglycosides as corrosion inhibitors.

2. Preservative according to claim 1,
**characterized in that**
the preservative contains at least one antioxidant.

3. Preservative according to claim 1,
**characterized in that**
the trimethylamino acetic acid derivative is applied in amounts of 0.001-0.1 weight% dry matter based on the weight of the preservative agent itself.

4. Preservative according to claim 1,
**characterized in that**
the alkyl polyglycoside is applied in amounts of 0.1-0.5 weight% dry matter based on the weight of the preservative agent itself.

5. Preservative according to claim 1,
**characterized in that**
the corrosion inhibitor is a mixture of alkyl polyglycoside and a trimethylamino acetic acid fatty acid derivative.

6. Preservative according to claim 1,
**characterized in that**
corrosion inhibitor is lauryl dimethylamino acetic acid in a concentration of 0.006-0.06 weight% dry matter based on the weight of the preservative itself.

7. Preservative agent according to claim 1,
**characterized in that**
the preservative itself is formic acid partly neutralized with ammonia.

8. Preservative according to claim 1,
**characterized in that**
the preservative is formic acid containing 0.001-0.1 weight% dry matter of trimethylloamino acetic acid derivatives and/or 0.1-0.5 weight% dry matter alkyl polyglycosides based on the weight of the formic acid.

## Patentansprüche

1. Wässeriges Konservierungsmittel für Gras und andere landwirtschaftliche Feldfrüchte, für Fisch und Fischprodukte sowie für Fleischprodukte, welches mindestens eine C1-18 Monokarbonsäure oder mindestens eines der jeweiligen Ammonium-, Natrium- oder Kaliumsalze derselben in Mischung mit mindestens einer der besagten Säuren und mindestens einem Korrosionsinhibitor enthält und welches C8-22 Fettsäurederivate von Trimethylaminoessigsäure und/oder C8-22 Alkylpolyglykoside als Korrosionsinhibitoren enthält.

2. Konservierungsmittel gemäß Anspruch 1, **dadurch gekennzeichnet, dass** das Konservierungsmittel mindestens ein Antioxidationsmittel enthält.

3. Konservierungsmittel gemäß Anspruch 1, **dadurch gekennzeichnet, dass** das Trimethylaminoessigsäurederivat eingesetzt wird in Mengen von 0,001 - 0,1 Gew.-% Trockenmasse bezogen auf das Gewichts des Konservierungsmittels selbst.

4. Konservierungsmittel gemäß Anspruch 1, **dadurch gekennzeichnet, dass** das Alkylpolyglykosid eingesetzt wird in Mengen von 0,1 - 0,5 Gew.-% Trockenmasse bezogen auf das Gewichts des Konservierungsmittels selbst.

5. Konservierungsmittel gemäß Anspruch 1, **dadurch gekennzeichnet, dass** der Korrosionsinhibitor aus einer Mischung von Alkylpolyglykosid und einem Trimethylaminoessigsäurederivat besteht.

6. Konservierungsmittel gemäß Anspruch 1, **dadurch gekennzeichnet, dass** der Korrosionsinhibitor aus Dimethylaminoessigsäure in einer Konzentration von 0,006 - 0,06 Gew.-% Trockenmasse bezogen auf das Gewichts des Konservierungsmittels selbst besteht.

7. Konservierungsmittel gemäß Anspruch 1, **dadurch gekennzeichnet, dass** das Konservierungsmittel selbst Ameisensäure ist, welche teilweise mit Ammoniak neutralisiert ist

8. Konservierungsmittel gemäß Anspruch 1, **dadurch gekennzeichnet, dass** das Konservierungsmittel Ameisensäure ist, welche 0,001 - 0,1 Gew.-% Trockenmasse von Trimethylaminoessigsäurederivaten und/oder 0,1 - 0,5 Gew.-% Trockenmasse von Alkylpolyglykosiden, bezogen auf das Gewichts der Ameisensäure enthält.

## Revendications

1. Agent conservateur aqueux pour de l'herbe et d'autres récoltes agricoles, pour du poisson et des produits à base de poisson aainsi que pour des produits carnés, comprenant au moins un acide monocarboxylique C₁₋₈ ou au moins un des sels respectifs d'ammonium, de sodium ou de potassium en mélange avec au moins un desdits acides et au moins un inhibiteur de corrosion, comprenant des dérivés d'acides gras C₈₋₂₂ de l'acide triméthylaminoacétique et/ou des polyglycosides d'alkyle C₈₋₂₂ en tant qu'inhibiteurs de corrosion.

2. Agent conservateur suivant la revendication 1,
**caractérisé en ce que**
le conservateur contient au moins un antioxydant.

3. Agent conservateur suivant la revendication 1,
**caractérisé en ce que**
le dérivé d'acide triméthylaminoacétique est appliqué dans des quantités de 0,001-0,1% en poids de matière sèche sur la base du poids de l'agent conservateur lui-même.

4. Agent conservateur suivant la revendication 1,
**caractérisé en ce que**
le polyglycoside d'alkyle est appliqué dans des quantités de 0,1-0,5% en poids de matière sèche sur la base du poids de l'agent conservateur lui-même.

5. Agent conservateur suivant la revendication 1,
**caractérisé en ce que**
l'inhibiteur de corrosion est un mélange d'un polyglycoside d'alkyle et d'un dérivé d'acide gras de l'acide triméthylaminoacétique.

6. Agent conservateur suivant la revendication 1,
**caractérisé en ce que**
l'inhibiteur de corrosion est l'acide lauryldiméthylaminoacétique dans une concentration de 0,006-0,06% en poids de matière sèche sur la base du poids du conservateur lui-même.

7. Agent conservateur suivant la revendication 1,
**caractérisé en ce que**
le conservateur lui-même est de l'acide formique partiellement neutralisé avec de l'ammoniaque.

8. Agent conservateur suivant la revendication 1,
**caractérisé en ce que**
le conservateur est de l'acide formique contenant 0,001-0,1% en poids de matière sèche de dérivés de l'acide triméthylaminoacétique et/ou 0,1-0,5% en poids de matière sèche de polyglycosides d'alkyle sur la base du poids de l'acide formique.
